# EUROPEAN PATENT APPLICATION

(11) **EP 1 908 540 A1**
(43) Date of publication of application: **09.04.2008**
(21) Application number: 06823191.9
(22) Date of filing: 08.11.2006
(51) Int. Cl.: B22D 17/00, F16H 57/02

(54) **MOLDED PRODUCT PROVIDED WITH PROTRUDING SECTION**

(30) Priority: 08.11.2005 JP 2005323685
(71) Applicant: AISIN AW CO., LTD., Anjo-shi, Aichi 444-1192 (JP); TOYOTA JIDOSHA KABUSHIKI KAISHA, Toyota-shi Aichi 471-8571 (JP)
(72) Inventor: MIYOSHI, Toshiyuki, Anjo-shi, Aichi 444-1192 (JP); TODO, Minoru, Anjo-shi, Aichi 444-1192 (JP); HONDA, Atsushi, Toyota-shi, Aichi 471-8571 (JP); NAGATA, Wataru, Toyota-shi, Aichi 471-8571 (JP)
(74) Representative: TBK-Patent
(86) International application number: PCT/JP2006/322287
(87) International publication number: WO 2007/055246

(57) **Abstract**

In a cast product having a projecting portion that projects from a body portion and is integratedly cast with the body portion, a wall surface of the projecting portion is connected and integratedly cast with the body portion by means of a plurality of ribs. By this configuration, molten metal can easily flow up to a tip end of the projecting portion passing through the plurality of ribs from the body portion, and as a result, the generation of a casting cavity at the tip end of the projecting portion can be prevented. Furthermore, the strength of the projecting portion can be improved through reinforcement by means of the plurality of ribs.

## Description

### TECHNICAL FIELD

The present invention relates to a cast product having a projecting portion such as a case for an automatic transmission. More specifically, the present invention relates to a cast product with improved molten metal flow to a projecting portion.

### BACKGROUND ART

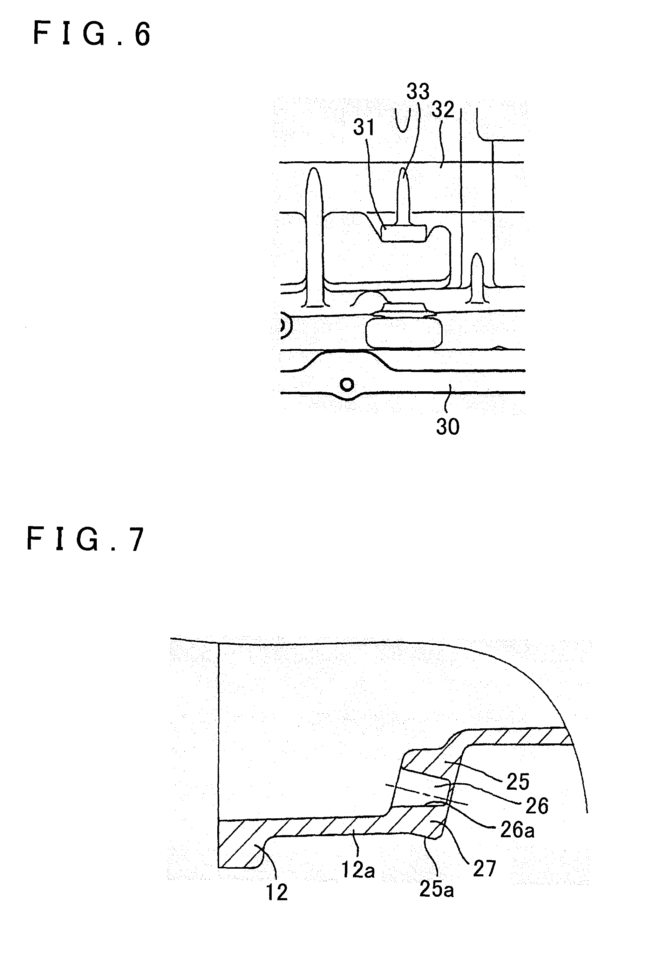

As FIG. 6 shows, a case 30 of an automatic transmission, i.e., an aluminum cast product, is integratedly cast such that a projecting portion 31 for supporting an end of a manual shaft projects from a cylindrical body portion 32 and a back surface center portion of the projecting portion 31 is connected with the body portion 32 via one rib 33.

### DISCLOSURE OF THE INVENTION

### Problem to be Solved by the Invention

With a cast product that provides the one rib 33 on the back surface center portion of the projecting portion 31 in this manner, however, the one rib 33 is inadequate to serve as a runner toward a tip end of the projecting portion 31 when the cast product undergoes die casting, and is a factor leading to the generation of a casting cavity. Furthermore, the case 30 of the transmission has a complicated shape and thin thickness. In locations where the flow of molten metal is insufficient, particularly around the projecting portion 31, it is necessary to improve the flow of molten metal in order to prevent the generation of a casting cavity.

It is an object of the present invention to provide a cast product having a projecting portion, wherein molten metal easily flows to the projecting portion to prevent the generation of a casting cavity, and the strength of the projecting portion is increased.

### MEANS FOR SOLVING THE PROBLEM

In order to achieve the above object, a cast product having a projecting portion according to the invention of claim 1 is a cast product having a projecting portion that projects from a body portion and is integratedly cast with the body portion. The cast product having a projecting portion is characterized in that a wall surface of the projecting portion is connected and integratedly cast with the body portion by means of a plurality of ribs.

According to the invention of claim 2, the cast product having a projecting portion according to claim 2 is characterized in that the lateral ribs on the two sides are inclined in mutually opposite directions with respect to the projecting portion such that a distance between the ribs increases farther away from the projecting portion.

According to the invention of claim 3, the cast product having a projecting portion according to claim 2 is characterized in that the lateral ribs on the two sides are inclined in mutually opposite directions with respect to the projecting portion such that a distance between the ribs increases farther away from the projecting portion.

According to the invention of claim 4, the cast product having a projecting portion according to any one of claims 1 to 3 is characterized in that the cast product is one of an aluminum and a magnesium die cast product.

According to the invention of claim 5, the cast product having a projecting portion according to any one of claims 1 to 4 is characterized in that the cast product is a case for a transmission.

According to the invention of claim 6, the cast product having a projecting portion according to claim 5 is characterized in that the body portion is a portion of the case for the transmission that accommodates a speed change mechanism of the transmission.

According to the invention of claim 7, the cast product having a projecting portion according to claim 5 or 6 is characterized in that the projecting portion is a support portion of a manual shaft that projects from the case for an automatic transmission.

### EFFECTS OF THE INVENTION

According to the structure of the present invention, a body portion and a wall surface of a projecting portion of a cast product are connected by means of a plurality of ribs and integratedly cast. Therefore, molten metal can easily flow up to a tip end of the projecting portion passing through the plurality of ribs from the body portion, and as a result, the generation of a casting cavity at the tip end of the projecting portion can be reliably prevented. Furthermore, the strength of the projecting portion can be improved through reinforcement by means of the plurality of ribs.

According to the invention of claim 2, the lateral ribs on two sides are connected and integratedly cast with the body portion and both side edge portions of the projecting portion. Therefore, a flow of molten metal can be well supplied up to the tip end of the projecting portion, with the molten metal passing through the lateral ribs on the two sides, and as a result, the generation of a casting cavity at the tip end of the projecting portion can be reliably prevented.

According to the invention of claim 3, among the lateral ribs on the two sides, molten metal flows in from one lateral rib, and the molten metal flows out from another lateral rib. Therefore, a flow path of molten metal is formed that enables the realization of a smooth flow of molten metal.

According to the invention of claim 4, with an aluminum or magnesium die cast product having a complicated shape and a thin thickness, a projecting portion that projects from a body portion can be integratedly cast with the body portion without generating a casting cavity at a tip end of the projecting portion.

According to the invention of claim 5, with a case for a transmission, which is a cast product having a complicated shape and a thin thickness, a projecting portion that projects from a body portion can be integratedly cast with the body portion without generating a casting cavity at a tip end of the projecting portion.

According to the invention of claim 6, with a case for an automatic transmission having a thin thickness and whose body portion has a wide surface area, a projecting portion that projects from the body portion can be integratedly cast with the body portion without generating a casting cavity at a tip end of the projecting portion.

According to the invention of claim 7, with a case for an automatic transmission, which is a cast product having a complicated shape and a thin thickness, a support portion of a manual shaft that projects from a body portion can be integratedly cast with the body portion without generating a casting cavity at a tip end of the support portion.

### BRIEF DESCRIPTION OF THE DRAWINGS

[FIG. 1]

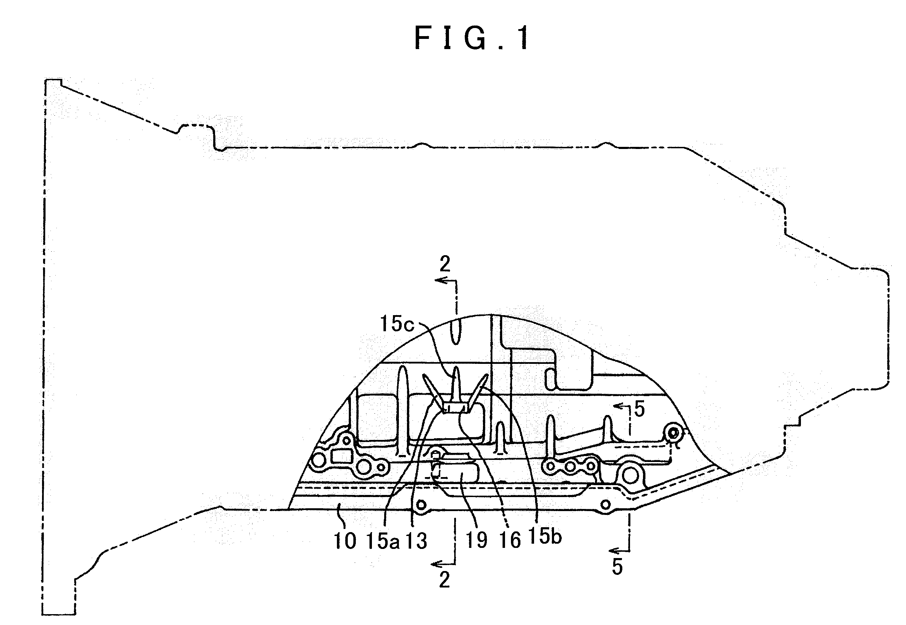

   FIG. 1 is a drawing showing a case for an automatic transmission, which is a cast product having a projecting portion according to an embodiment of the present invention.
[FIG. 2]

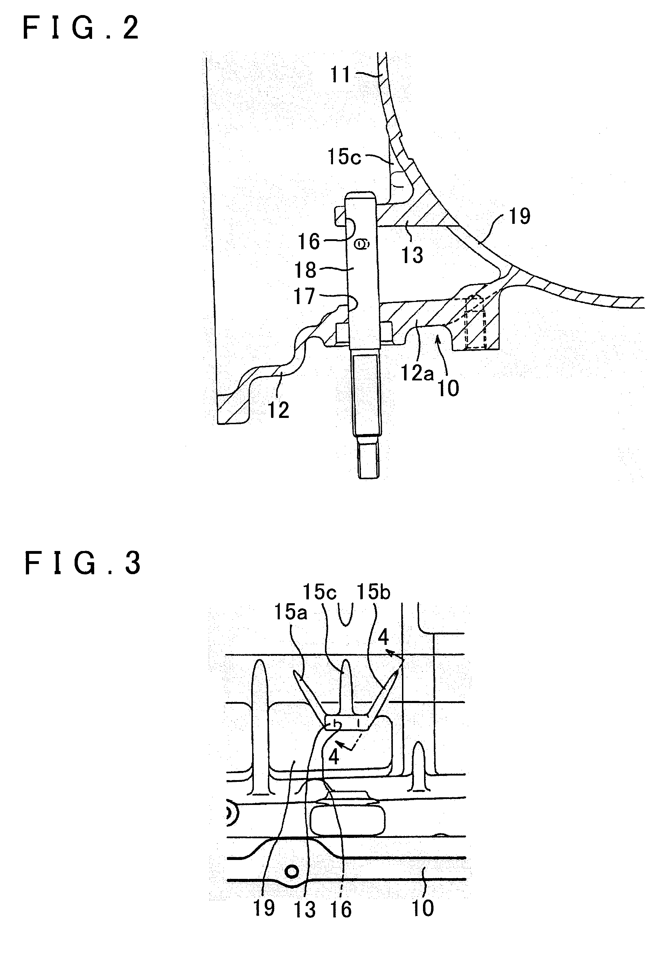

   FIG. 2 is a drawing adding a manual shaft to an enlarged cross-sectional view taken along a line 2-2 in FIG. 1.
[FIG. 3]
   FIG. 3 is an enlarged view of a section in the vicinity of the projecting portion in FIG. 1.
[FIG. 4]

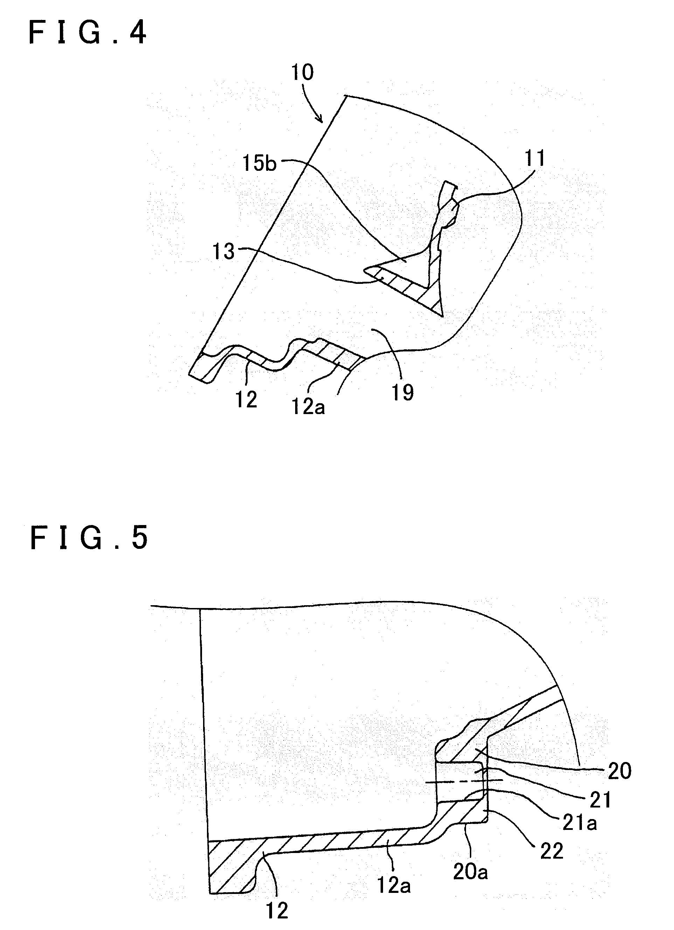

   FIG. 4 is a partial cross-sectional view taken along a line 4-4 in FIG. 3.
[FIG. 5]
   FIG. 5 is a partial enlarged cross-sectional view taken along a line 5-5 in FIG. 1.
[FIG. 6]
   FIG. 6 is a drawing showing a section in the vicinity of a projecting portion of a case in a conventional automatic transmission.
[FIG. 7]
   FIG. 7 is a drawing showing a molten metal surface sensor seat portion of a case in a conventional automatic transmission.

### DESCRIPTION OF THE REFERENCE NUMERALS

- 10: CASE
- 11: BODY PORTION
- 12: LOWER CHAMBER PORTION
- 13: PROJECTING PORTION
- 14,21,26: CORED HOLE
- 15a, 15b: LATERAL RIB
- 15c: CENTER RIB
- 18: MANUAL SHAFT
- 19: OPENING
- 20, 25: OIL SURFACE SENSOR SEAT PORTION

### BEST MODES FOR CARRYING OUT THE INVENTION

An embodiment of a cast product having a projecting portion according to the present invention will be described below based on the drawings. In FIG. 1, reference numeral 10 denotes a case for an automatic transmission, which is achieved by die casting and molding an aluminum alloy. The automatic transmission is structured with a torque converter and a multi-speed change mechanism serially arranged on an axis. Accommodated within the case 10 are a plurality of planetary gears, a clutch, a brake, and the like. Engagement and disengagement of the clutch and the brake changes the power transmission path of the plurality of planetary gears, while the rotation of an input member is changed to a plurality of speeds and transmitted to an output member. The case 10 may be cast using another metal such as a magnesium alloy.

As FIGS. 2 to 4 show, the case 10 is integratedly cast with a cylindrical body portion 11 and a lower chamber portion 12. The body portion 11 includes the plurality of planetary gears, the clutch, the brake, and the like, which act as a speed change mechanism of the transmission. The lower chamber portion 12 accommodates a valve body, i.e., a control instrument, and accumulates lubrication oil. A side of the case 10 is integratedly cast such that a tab-like projecting portion 13 that faces a side wall 12a of the lower chamber portion 12 projects from the body portion 11 into the lower chamber portion 12. A tip end portion of the projecting portion 13 is provided with a machined hole 16.

Both side edge portions of the projecting portion 13 and the body portion 11 are respectively connected by lateral ribs 15a, 15b and integratedly cast. The lateral ribs 15a, 15b have a generally triangular shape. The respective lateral ribs 15a, 15b are integratedly joined on one side with the projecting portion 13 along a wall surface from respective lateral portions of the machined hole 16 of the projecting portion 13 tip end, while another side is integratedly joined with the body portion 11. The lateral ribs 15a, 15b are inclined in mutually opposite directions with respect to the projecting portion 13 such that a distance between the ribs increases farther away from the projecting portion 13. A center rib 15c with a generally triangular shape is disposed between the lateral rib 15a and the lateral rib 15b. One side of the center rib 15c is integratedly joined with the projecting portion 13 along a wall surface in front of the machined hole 16, while another side is integratedly joined with the body portion 11.

The machined hole 16 of the projecting portion 13 is mechanically machined to serve as the machined hole 16 that supports a manual shaft. A manual shaft 18 is rotatably fitted and supported in the machined hole 16 and a through hole 17 provided in a side wall of the lower chamber portion 12. The manual shaft 18 is connected with a select lever by means of a linkage mechanism. The manual shaft 18 rotates in accordance with the shifting of the select lever to parking P, reverse R, neutral N, and drive D. Depending on such rotation, a manual valve within a valve body (not shown) is switched via a lever and a rod, or a parking pole is engaged or disengaged with a parking gear. Between the projecting portion 13 and the side wall 12a of the lower chamber portion 12, an opening 19 is provided that runs through the lower chamber portion 12 and an internal portion of the cylindrical body portion 11. The manual shaft 18 is connected with a parking rod whereby the parking pole is engaged to and disengaged from the parking gear via a detent lever (not shown).

The case 10 is cast by injecting a molten aluminum alloy at a predetermined pressure into a die formed with a cavity corresponding to a thickness portion of the case 10. Subsequent to cooling, the die is opened and the case 10, i.e., the case product, is extracted. As FIGS. 1 and 3 show, the case 10 is cast with an orientation such that the projecting portion 13 extends in the horizontal direction, and the center rib 15c extends vertically upward from the projecting portion 13. The opening 19 is thus positioned downward of the projecting portion 13. As a consequence, there is insufficient flow of molten metal from the thin cylindrical body portion 11 with a wide surface area toward the projecting portion 13. However, in addition to flowing directly from the body portion 11 to the projecting portion 13, the molten metal may flow from the body portion 11, past the lateral ribs 15a, 15b, and then flow from respective lateral portions of a section corresponding to the side edge portion of the projecting portion 13 and the machined hole 16 of the tip end portion, and flow in or out closer to the tip end than a section corresponding to the machined hole 16. For example, molten metal flowing in from the lateral rib 15a and molten metal flowing out from the lateral rib 15b forms a flow path of molten metal. Moreover, the molten metal also passes the center rib 15c and flows into or out of a center portion of the projecting portion 13. As such, a flow path of molten metal is formed by the lateral ribs 15a, 15b and the center rib 15c with respect to the projecting portion 13. Therefore, a smooth flow path of molten metal can be formed. Thus, the generation of a casting cavity at the tip end of the projecting portion 13 can be prevented, and the use of a plurality of ribs to reinforce the projecting portion 13 makes it possible to improve the strength of the projecting portion 13.

FIG. 5 is a partial enlarged cross-sectional view taken along a line 5-5 in FIG. 1. This drawing shows a cross section of an oil surface sensor seat portion 20 for attaching an oil surface sensor, which detects an oil surface level of lubrication oil accumulated in the lower chamber portion 12. The oil surface sensor seat portion 20 is formed such that a portion of a side wall of the lower chamber portion 12 is parallel to a lower surface of the lower chamber portion 12 and projects outward partway. Provided in the oil surface sensor seat portion 20 is a cored hole 21 that is generally parallel to the side wall 12a of the lower chamber portion 12 from inside the lower chamber portion 12. The cored hole 21 and an upper surface of the oil surface sensor seat portion 20 are mechanically machined, and an oil surface sensor is attached to the oil surface sensor seat portion 20 with a tip end portion of the oil surface sensor inserted inside the lower chamber portion 12.

Conventionally, an oil surface sensor seat portion 25 shown in FIG. 7 is inclined with respect to a lower surface of the lower chamber portion 12. Therefore, an upper portion of an outer side surface 25a of the oil surface sensor seat portion 25 protrudes outward. In addition, an outer side wall surface 26a of a cored hole 26 is inclined in a direction away from the side wall 12a of the lower chamber portion 12 and faces upward so as to enable die release. Therefore, a thickness 27 between the outer side surface 25a of the oil surface sensor seat portion 25 and the outer side wall surface 26a of the cored hole 26 is upwardly thicker and becomes a factor leading to the generation of a casting cavity.

On the contrary, according to the present embodiment, the above-described oil surface sensor seat portion 20 is formed parallel to a lower surface. Therefore, an outer side surface 20a of the oil surface sensor seat portion 20 is generally parallel to the side wall 12a of the lower chamber portion 12. Thus, a thickness 22 between an outer side wall surface 21 a of the cored hole 21 and the outer side surface 20a of the oil surface sensor seat portion 20 is uniform, and enables improved castability while preventing the generation of a casting cavity.

### INDUSTRIAL APPLICABILITY

A cast product having a projecting portion according to the present invention is applicable for use as a cast product having a projecting portion such as a case for an automatic transmission, wherein a projecting portion for supporting a tip end of a manual shaft projects from a cylindrical body portion.

## Claims

1. A cast product having a projecting portion that projects from a body portion and is integratedly cast with the body portion, the cast product having a projecting portion **characterized in that** a wall surface of the projecting portion is connected and integratedly cast with the body portion by means of a plurality of ribs.

2. The cast product having a projecting portion according to claim 1, **characterized in that** the plurality of ribs are lateral ribs on two sides which are connected and integratedly cast with the body portion and both side edge portions of the projecting portion.

3. The cast product having a projecting portion according to claim 2, **characterized in that** the lateral ribs on the two sides are inclined in mutually opposite directions with respect to the projecting portion such that a distance between the ribs increases farther away from the projecting portion.

4. The cast product having a projecting portion according to any one of claims 1 to 3, **characterized in that** the cast product is one of an aluminum and a magnesium die cast product.

5. The cast product having a projecting portion according to any one of claims 1 to 4, **characterized in that** the cast product is a case for a transmission.

6. The cast product having a projecting portion according to claim 5, **characterized in that** the body portion is a portion of the case for the transmission that accommodates a speed change mechanism of the transmission.

7. The cast product having a projecting portion according to claim 5 or 6, **characterized in that** the projecting portion is a support portion of a manual shaft that projects from the case for an automatic transmission.

## Amended claims

### Amended claims under Art. 19.1 PCT

**1.** (Amended) A cast product of a case for an automatic transmission in which a projecting portion that projects from a body portion of the case of the automatic transmission is integratedly cast with the body portion, the cast product of the case **characterized in that** a wall surface of the projecting portion is connected and integratedly cast with the body portion by means of a plurality of ribs, and among the plurality of ribs, at least one rib is integratedly joined on one side thereof with the projecting portion along a wall surface of a side edge portion of the projecting portion, while another side thereof is integratedly joined with the body portion.

**2.** (Amended) The cast product of a case for an automatic transmission according to claim 1, **characterized in that** the plurality of ribs are lateral ribs on two sides which are connected and integratedly cast with the body portion and both side edge portions of the projecting portion.

**3.** (Amended) The cast product of a case for an automatic transmission according to claim 2, **characterized in that** the lateral ribs on the two sides are inclined in mutually opposite directions with respect to the projecting portion such that a distance between the ribs increases farther away from the projecting portion.

**4.** (Amended) The cast product of a case for an automatic transmission according to any one of claims 1 to 3, **characterized in that** the cast product is one of an aluminum and a magnesium die cast product.

**5.** (Deleted)

**6.** (Amended) The cast product of a case for an automatic transmission according to any one of claims 1 to 4, **characterized in that** the body portion is a portion of the case for the automatic transmission that accommodates a speed change mechanism of the automatic transmission.

**7.** (Amended) The cast product of a case for an automatic transmission according to claim 6, **characterized in that** the projecting portion is a support portion of a manual shaft that projects from the case for the automatic transmission.
